(19) Europäisches Patentamt
European Patent Office
Office européen des brevets

(11) **EP 4 579 210 A1**

(12) **EUROPEAN PATENT APPLICATION**

(43) Date of publication:
**02.07.2025 Bulletin 2025/27**

(21) Application number: **23220856.1**

(22) Date of filing: **29.12.2023**

(51) International Patent Classification (IPC):
**G01N 15/0205** $^{(2024.01)}$   **G01N 21/51** $^{(2006.01)}$
**G01N 21/47** $^{(2006.01)}$

(52) Cooperative Patent Classification (CPC):
**G01N 15/0211; G01N 21/51;** G01N 2015/0038;
G01N 2015/0053; G01N 2015/0222;
G01N 2015/0294; G01N 2021/4711

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Malvern Panalytical Limited
Malvern, Worcestershire WR14 1XZ (GB)**

(72) Inventor: **The designation of the inventor has not
yet been filed**

(74) Representative: **Barker Brettell LLP
100 Hagley Road
Edgbaston
Birmingham B16 8QQ (GB)**

(54) **PARTICLE CHARACTERISATION**

(57)    A particle characterisation instrument (100) is provided. The instrument comprises: a light source (140) configured to illuminate a sample holder with an illumination beam along an illumination optical path (103) so as to produce scattered light from the interaction between the illumination beam and a sample (106) on/in the sample holder (104); at least one detector (114, 124, 134) configured to detect the scattered light; and a processor (200) configured to receive a detector signal from the at least one detector (114, 124, 134) and to determine a particle characteristic therefrom. The light source (140) is configured to produce a polyspectral illumination beam comprising at least three different wavelengths.

Figure 1

EP 4 579 210 A1

**Description**

FIELD OF THE INVENTION

The present disclosure relates to a method and instrument for characterising particles. More specifically, the present disclosure relates to a method and instrument for characterising particles by detecting light scattered by the particles.

BACKGROUND

Static light scattering/laser diffraction and dynamic light scattering (often termed SLS and DLS, respectively) are two widely used methods for characterising particles. In both techniques, particles suspended in a fluid are illuminated with a light beam, and scattered light resulting from the interaction of the light beam with the particles is detected. Characteristics of the detected scattered light are used to infer properties of the particles.

In static light scattering and laser diffraction measurements, the distribution of the intensity of scattered light at different scattering angles is used to infer particle properties. Static light scattering is not concerned with temporal variance in scattering intensity - an average intensity at each sampled scattering angle is typically used. Typical static light scattering instruments comprise sensors arranged at each of a plurality of scattering angles. The vector of detected intensities at the different scattering angles can be inverted (e.g. with reference to Mie scattering theory) to determine a particle size distribution.

In dynamic light scattering, a time history of the intensity of scattered light is used to infer particle properties. The temporal fluctuations of the intensity are related to particle size, with smaller particles resulting in fluctuations with a shorter characteristic timescale than larger particles (due to Brownian motion). The intensity of scattered light is typically autocorrelated to produce an autocorrelation function (or equivalently, a Fourier transformation based approach may be used). A fit to the autocorrelation function can be used to determine an average particle size, a polydispersity and/or a particle size distribution (e.g. using well-known techniques such as the cumulant method or the CONTIN algorithm).

Some static light scattering instruments (e.g. the Mastersizer 3000, from Malvern Panalytical Ltd) include a first light source with a first wavelength, and a second light source with a second wavelength. The use of more than one wavelength enables a broader range of particle sizes to be analysed. At particle diameters of approximately 1/10 of the wavelength of the illuminating light, scattering becomes nearly isotropic, and smaller particles can therefore be more readily analysed using smaller wavelengths.

Some dynamic light scattering instruments employ more than one scattering angle, in order to perform multi-angle dynamic light scattering (often termed MADLS). In multi-angle dynamic light scattering, a time history of light scattered at more than one angle is obtained (either sequentially, or simultaneously). A fit is then typically performed on the total data set comprising autocorrelation functions obtained for each scattering angle. Multi-angle dynamic light scattering may provide more reliable measurements than DLS measurements performed at a single scattering angle.

It is typically inconvenient or expensive to construct a dynamic light scattering instrument to include a large number of detection angles. In some circumstances the sample cell geometry may make it difficult to perform measurements at multiple scattering angles. Detectors suitable for dynamic light scattering must be very sensitive and fast (e.g. avalanche photodiodes), in order to provide the necessary temporal resolution in the scattering intensity. A plurality of such detectors can be very expensive.

An improved method and instrument for characterising particles from scattered light is desired.

SUMMARY

According to a first aspect, there is provided a particle characterisation instrument, comprising:

a light source configured to illuminate a sample holder with an illumination beam along an illumination optical path so as to produce scattered light from the interaction between the illumination beam and a sample on/in the sample holder;
at least one detector configured to detect the scattered light;
a processor configured to receive a detector signal from the at least one detector and to determine a particle characteristic therefrom;
wherein the light source is configured to produce a polyspectral illumination beam with at least three different wavelengths.

The illumination beam may also be referred to herein as 'illuminating beam', 'illuminating light beam', 'illuminating light', 'light beam', 'illumination light beam', or similar.

Each of the at least three different wavelengths may be separated by at least 20nm or at least 10nm. The difference between the longest of the at least three wavelengths and the shortest of the at least three wavelengths may be at least 200nm, or at least 100nm, or at least 50nm.

The term polyspectral may refer to a spectrum comprising a continuous band of wavelengths (over which non-negligible power is emitted) of >50nm or >100nm or >200nm or >500nm. A non-negligible amount of power may be a power spectral density of at least 10% of the peak power spectral density or at least 5% of the peak power spectral density. The term polyspectral may alternatively mean that a plurality of narrow band discrete wavelengths is present, from different light emitters. Each narrow discrete wavelength may have a linewidth of <20nm (FWHM) or <10nm or <5nm. The central wavelength for each of the narrow bands may be separated by at least 20nm, or at least 40nm.

The sample holder may be a sample cell, a capillary (such as a capillary tube), a well plate (such as a well of a well plate), a slide (on which a droplet sample is supported), or any other form of sample holder.

The processor may be configured to perform a static light scattering analysis in which at least one of a radius of gyration, a molecular weight and a second virial coefficient are determined from a fit to the Zimm equation performed over two or more of the at least three different wavelengths.

The processor may be configured to perform a dynamic light scattering measurement by performing a fit to scattering data obtained from the at least one detector signal at two or more of the at least three different wavelengths.

The instrument may be configured to perform a multi-q dynamic light scattering analysis, and the processor may be configured to solve an equation of the form:

$$\begin{bmatrix} \boldsymbol{g}^{(1)}(q_1) \\ \cdots \\ \boldsymbol{g}^{(1)}(q_n) \end{bmatrix} = \begin{bmatrix} \alpha_1 \boldsymbol{K}(q_1) \\ \cdots \\ \alpha_n \boldsymbol{K}(q_n) \end{bmatrix} \boldsymbol{x}$$

wherein:

$\boldsymbol{g}^{(1)}(q_i)$ is a measured correlation function for scattering vector $i$, corresponding with a scattering vector $q_i$, $\boldsymbol{K}(q_i)$ is an instrument scattering matrix computed for the scattering vector $q_i$, $\boldsymbol{x}$ is a particle size distribution and $\alpha_i$ is a scaling coefficient for scattering vector $q_i$.

The instrument may be configured to perform a multi-q dynamic light scattering analysis from light scattered along a common detection optical path in the sample.

The common detection optical path may correspond with a relatively narrow range of scattering angles. For example, the detection optical path may include a light cone of scattered light subtending less than 5 degrees or less than 2 degrees.

The common detection optical path may correspond with back scattered light. There may be a plurality of detection optical paths, each corresponding with a different angle of scattered light. The at least one detector may be configured to detect scattered light at each of the different wavelengths along each of the plurality of detection optical paths. The plurality of detection optical paths may comprise forward scatter, back scatter and side scatter.

Back scattered light may be defined as scattered light that has a propagation direction in the sample that is at an angle of more than 90 degrees to the propagation direction of the illuminating light beam in the sample. Forward scattered light may be defined as scattered light that has a propagation direction in the sample that is at an angle of less than 90 degrees to the propagation direction of the illuminating light beam in the sample. Side-scattered light may be defined as scattered light that has a propagation direction in the sample that is at an angle of 90 degrees to the propagation direction of the illuminating light beam in the sample.

The at least one detector may be configured to detect light scattered at multiple different scattering angles, and the multi-q dynamic light scattering measurement may be determined with reference to q vectors that correspond with more than one scattering angle and more than one wavelength of scattered light.

There may be fewer than five detectors.

The at least one detector may be a single detector (for example, a single detector may be coupled to at least one detection fibre, and the at least one detection fibre may be configured to receive light scattered at more than one angle and/or scattered light from more than one wavelength of scattered light).

The light source may comprise a plurality of light emitters having different emission wavelengths, configured to illuminate the sample along a common illumination optical path in the sample so that the scattering angle or angles detected by the at least one detector for each wavelength is substantially the same. The light emitters may be diode lasers, for example.

The instrument may be configured to illuminate the sample and to receive scattered light through a surface of the sample holder.

In embodiments where the sample holder comprises a well plate, the well plate may comprise a plurality of sample holding locations, and the instrument may comprise a translation stage configured to move the sample holder relative to the illumination beam to automatically analyse samples in a plurality of the sample holding locations.

The instrument may further comprise a probe configured to be placed in contact with the sample to direct the illumination beam into the sample, and to receive and direct the scattered light to the at least one detector.

The instrument may further comprise a dispersive element. The light source may comprise a plurality of light emitters having different emission wavelengths, wherein the illumination optical path from each light emitter to the sample is dispersed onto a common illumination optical path in the sample by the dispersive element.

The dispersive element may comprise a diffraction grating or a prism.

A detection optical path from the sample to each of the at least one detectors may include the dispersive element.

The particle characteristic may comprise at least one of a particle size, particle size distribution, polydispersity, molecular weight, radius of gyration, second virial coefficient, electrophoretic mobility, magnetophoretic mobility, zeta potential, and a particle shape.

According to a second aspect, there is provided a method of performing particle characterisation, comprising:

for each of at least three different wavelengths:

illuminating a sample with an illumination beam to produce scattered light from an interaction between the illumination beam and particles of the sample;
detecting the scattered light and recording scattering data corresponding with the scattered light;

using a processor to determine a particle characteristic from the combination of the scattering data for each wavelength.

The method may comprise illuminating the sample with a polyspectral illumination beam. The method may comprise illuminating the sample with more than one polarisation state. The detection may be sensitive to polarisation (so that a particular polarisation state of the scattered light can be detected).

The method of the second aspect may employ any of the steps described with reference to the first aspect, or may comprise using an instrument according to the first aspect (including any optional features thereof).

According to a third aspect, there is provided a non-transient machine readable medium for configuring an instrument to perform a measurement using the method in accordance with the second aspect. The instrument may be in accordance with the first aspect, including any of the optional features thereof.

LIST OF FIGURES

Example embodiments of the invention will be described with reference to the accompanying drawings, in which:

Figure 1 is a schematic of a particle characterisation instrument employing three scattering angles;

Figure 2 is a further example of a particle characterisation instrument;

Figure 3 is a schematic of multi-wavelength illumination with scattered light detection at three different scattering angles, also illustrating that a scattering volume is different for different detection angles;

Figures 4 to 6 compare autocorrelation functions obtained from: 632.8 nm light at various different scattering angles (Figure 4); light scattered at 90 degrees with wavelengths of 380 nm to 850 nm (Figure 5); and light scattered at 173 degrees with wavelengths of 380 nm to 850 nm.

Figure 7 illustrates a method for performing particle characterisation using a plurality of wavelengths;

Figure 8 is a schematic view of a generalised illumination scheme;

Figures 9 and 10 are schematics of multi-wavelength illumination of a sample well plate, employing a single back-scatter detector channel;

Figure 11 shows a meniscus of a sample in a well plate acting as a diverging lens;

Figure 12 is a schematic of a probe based light scattering instrument with multi-wavelength illumination and a back-scatter detection channel;

Figure 13 is a schematic of a non-invasive light scattering instrument provided with multi-wavelength illumination and three detection channels at different scattering angles (back scatter, forward scatter and side scatter);

Figure 14 is a schematic of a capillary based measurement;

Figure 15 is a schematic of a folded capillary based measurement with electrodes for applying an electrical field;

Figure 16 is a schematic illustrating a scattering volume close to a cuvette wall;

Figure 17 shows a beam combining arrangement, for combining multiple wavelengths onto a single illumination optical path;

Figure 18 is a schematic of an arrangement in which a diffraction grating is used to combine multiple illumination wavelengths onto a single illumination path into a sample cell;

Figure 19 is a schematic of an arrangement in which a diffraction grating is used to combine multiple illumination wavelengths onto a single illumination path, and in which each detection optical path is via the diffraction grating; and

Figure 20 illustrates an arrangement for matching scattering volume using a common focussing lens.

DETAILED DESCRIPTION

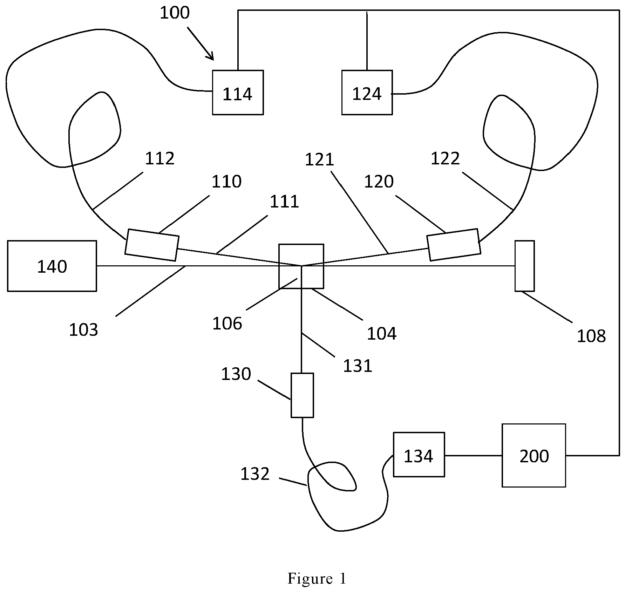

Figure 1 schematically shows an instrument 100 for determining a particle characteristic by detecting light scattered from the sample 106. The instrument 100 comprises: a light source assembly 140, first, second and third detectors 114, 124, 134, first, second and third detection optical fibres 112, 122, 132, first, second and third coupling lenses 110, 120, 130, a sample cell 104, and a processor 200.

The light source assembly 140 is configured to illuminate the sample 106 with an illuminating light beam 103 (also referred to herein as an illumination (or illuminating) optical path). In this example the sample 106 is within a sample cell 104, this is not essential and the sample may, for instance, alternatively be a droplet on a surface. The illuminating light beam 103 passes through a wall of the sample cell 104, through the sample, through another wall of the sample cell 104 to a beam trap 108. The beam trap 108 may be configured to trap and absorb the light beam 103 to minimise contamination of the scattered light by any reflections of the light beam 103. A beam monitor (not shown) may be provided to monitor the power of the light beam 103.

The light source assembly 140 is configured to produce an illuminating light beam 103 with a plurality of wavelengths. The light source 140 may be configured to simultaneously illuminate the sample with at least three wavelengths of light.

The first detector 114 is configured to detect backscattered light (scattered along a backward scatter detection optical path 111), with a propagation direction at an angle of more than 90 degrees to the propagation direction of the illuminating light beam 103 (in the sample). The first detector 114 may be a photon counting detector, such as an avalanche photodiode, capable of measuring a time history of scattered light suitable for performing dynamic light scattering.

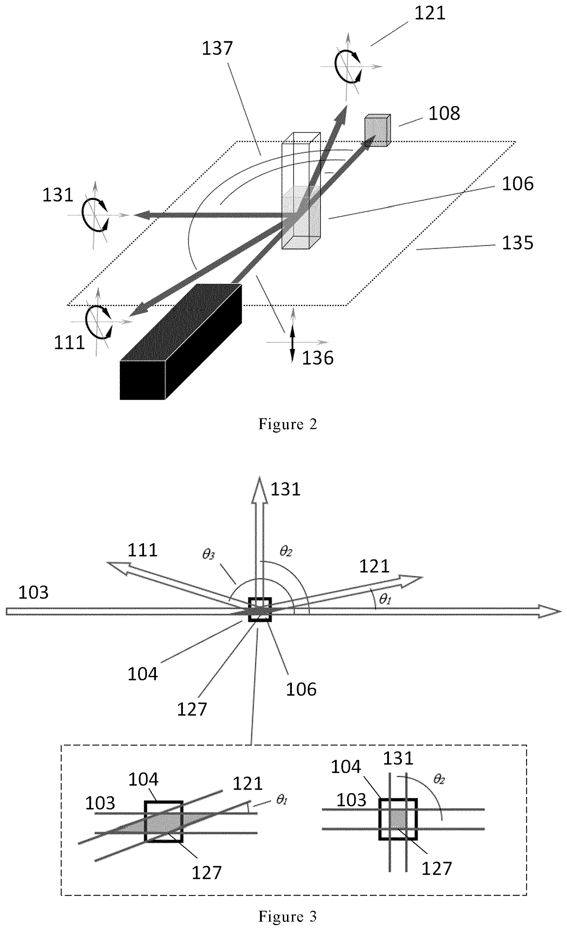

In the example embodiment, the scattering angle ($\theta_3$ in Figure 3) of the backscattered light detected by the first detector 114 may be in the range 165 to 178 degrees. The first detector 114 receives the backscattered light via the first detection optical fibre 112. The backscattered light is coupled into the first detection optical fibre from the sample. A range of scattering angles received at the first detector 114 via the detection optical path 111 is defined by the combination of the first coupling lens 110 and first detection optical fibre 112. In order to perform a dynamic light scattering measurement the angle subtended by the cone of scattered light communicated to the first detector 114 via the first detection optical path may be less than 5 degrees, and more preferably less than 2 degrees.

The second and third detection optical paths are similar to the first detection optical path, but the second detector 124 receives scattered light along a forward scatter detection optical path 121 (for example, with a scattering angle $\theta_1$ in the range of 2 degrees to 15 degrees) and the third detector 134 receives scattered light along a side scatter detection optical path 131, with a scattering angle $\theta_2$ of 90 degrees.

The processor 200 is configured to receive signals from the first, second and third light detectors 114, 124, 134, and to process the signals in order to determine a characteristic of the particles. In some embodiments the processor may be configured to perform a multi-q light scattering measurement to determine a particle size distribution, as discussed below.

When performing a MADLS measurement with three measurement angles ($\theta_1$, $\theta_2$ and $\theta_3$) the following system of linear equations must be solved. This system of linear equations can be generalised to n measurement angles and written as (with only the relevant matrix components shown):

$$\begin{bmatrix} \boldsymbol{g}^{(1)}(\theta_1) \\ ... \\ \boldsymbol{g}^{(1)}(\theta_n) \end{bmatrix} = \begin{bmatrix} \alpha_1 \mathbf{K}(\theta_1) \\ ... \\ \alpha_n \mathbf{K}(\theta_n) \end{bmatrix} \boldsymbol{x} \qquad (1)$$

Where $\boldsymbol{g}^{(1)}(\theta_i)$ is the measured field auto-correlation function at angle $i$, $\mathbf{K}(\theta_i)$ is the instrument scattering matrix computed for angle $i$, and $x$ is the particle size distribution. The aim is to determine the particle size distribution from the measured correlation functions. The coefficients $\alpha_i$ are scaling factors, and initial estimates for these can be calculated by extrapolation (linear or otherwise) of the correlation function to time-zero to determine the y-axis multiplier. Conventionally, the first scattering ($i = 1$) angle may have a scaling coefficient defined as 1 ($\alpha_1 = 1$). However, this is merely an arbitrary convention: in alternative embodiments the scaling may be performed relative to any of the measurements 1 to $n$.

Dynamic light scattering employing more than one wavelength of light has been proposed (Segre, P. N., et al. "Two-colour dynamic light scattering." Journal of Modern Optics 42.9 (1995): 1929-1952.). In this arrangement, two different wavelengths of light were used to illuminate a sample at two different angles, such that the detected light scattered from each illuminating beam had the same $q$ vector. The two detected signals were cross correlated in order to mitigate multiple scattering.

In the present disclosure multiple illumination wavelengths may be used to sample scattered light with different q vectors, as an alternative, or in addition to, sampling scattered light at detectors arranged to receive different scattering angles.

More generally, the instrument scattering matrix $\boldsymbol{K}$ depends on the scattering vector q (rather than just scattering angle):

$$q = \frac{4\pi n}{\lambda} \sin\left(\theta / 2\right) \qquad (2)$$

where $\theta$ is the angle between the scattered light and the illuminating light beam, $\lambda$ is the wavelength of the illuminating light and $n$ is the refractive index of the dispersant in which the particles are suspended.

The equations mentioned above for performing MADLS can therefore be generalised to describe multi-q light scattering.

$$\begin{bmatrix} \boldsymbol{g}^{(1)}(q_1) \\ ... \\ \boldsymbol{g}^{(1)}(q_n) \end{bmatrix} = \begin{bmatrix} \alpha_1 \mathbf{K}(q_1) \\ ... \\ \alpha_n \mathbf{K}(q_n) \end{bmatrix} \boldsymbol{x} \qquad (3)$$

Where $\boldsymbol{g}^{(1)}(q_i)$ is the measured field auto-correlation function at scattering vector $i$, $\mathbf{K}(q_i)$ is the instrument scattering matrix computed for scattering vector $q$, and $x$ is the particle size distribution. Particle size distribution may be determined from the measured correlation functions. The coefficients $\alpha_i$ are again scaling factors, and initial estimates for these can again be calculated by extrapolation (linear or otherwise) of the correlation function to time-zero to determine the y-axis multiplier.

Following this approach, a set of autocorrelation functions can be determined corresponding with different scattering vectors (q) that correspond with different wavelengths and/or different scattering angles. For example, multiple illumination wavelengths can be used with a single scattering angle to perform a particle characterisation that is equivalent to a prior art MADLS measurement, or a better analysis can be performed using a specific limited number of detection angles by varying wavelength to increase the range or density of sampled q values.

A nested approach may be used in which a non-linear solver (such as Nelder-Mead simplex, Levenberg-Marquardt, Gauss-Newton or another method) is used to iterate an estimate for the scaling factors $\alpha$, and within each non-linear iteration, a linear solver (e.g. non-negative least squares) is used to determine a best fit for $\boldsymbol{x}$ and consequently determine a residual error. The residual error is then used by the non-linear solver to select new values for each of the scaling factors. This is exemplified in the following pseudo-code:

Provide initial estimates for $\alpha_2$ to $\alpha_n$, and define $\alpha_1 = 1$

Do {

    Iterate $\alpha_2$ to $\alpha_n$ using a non-linear solver, such as Nelder-Mead simplex, Levenberg-Marquart, Gauss-Newton or other method

    Solve for $\mathbf{x}$ using a linear solver, such as non-negative least squares

    Calculate residual, of the form $\|\boldsymbol{g} - \mathbf{K}\boldsymbol{x}\|^2$

} while (residual>predefined exit tolerance)

In each iteration of the non-linear solver (e.g. Levenberg-Marquart, etc), the estimate for each of the scaling coefficients $\alpha_2$ to $\alpha_n$ is updated before a new estimate for the particle size distribution $\mathbf{x}$ is determined using a linear solver such as NNLS, and the new estimate of particle size distribution used to calculate a residual. The residual is both used by the non-linear solver in the next iteration to select the new estimates for the scaling factors, and to determine if the estimates are acceptable. This work flow means that the problem is efficiently partitioned so that the scaling factors can be accurately and efficiently determined.

In other embodiments, a plurality of wavelengths may be used to provide different scattering vectors for a diffraction based measurement, in which a pattern of scattering intensities at different scattering vectors is used to determine a particle size or particle size distribution. In diffraction measurements, a vector of the intensity of scattered light at each of a plurality of scattering vectors may be inverted based on Mie theory to determine a particle size distribution or a particle size.

Figure 2 shows a particle scattering instrument illustrating light scattering from a sample 106 in a cuvette, illuminated by a light beam 103. In this example, the illuminating light beam 103 is vertically polarised, and is emitted by light source 140, and is scattered by the sample 106. A scattering plane 135 is defined, normal to the vertical polarisation orientation of the illuminating light beam 103. Figure 2 depicts back scattered light 111, forward scattered light 121 and side scattered light 131, with arbitrary polarisation state. Figure 2 also depicts a portion of light beam 103 that has passed through the sample, un-scattered, to a beam trap 108. The beam trap 108 may be configured to trap and absorb the light beam 103 to minimise contamination of the scattered light by any reflections of the light beam 103. In some embodiments the detection optical path may comprise an optical filter, and in other embodiments, all polarisations of scattered light may be detected.

Figure 3 illustrates a variation in the size of a scattering volume 127 (defined as the intersection between an illumination optical path and a detection optical path). An illumination optical path 103 is shown, along with a back scatter detection optical path 111 with a scattering angle $\theta_3$, a forward scatter detection optical path 121 with a scattering angle $\theta_1$ and a side scatter detection optical path 131 with a scattering angle $\theta_2$.

As shown in the inset magnified views, a forward scatter detection angle $\theta_1$ (for forward scatter detection optical path 121) results in an elongated scattering volume 127 that is larger than a scattering volume 127 resulting from a side scatter detection angle $\theta_2$ (for side scatter detection optical path 131). Whilst not shown, it will be appreciated by those skilled in the art that an elongated scattering volume will also result for back scatter detection angles. In some cases, a forward or back scatter detection angle may result in a scattering volume that cannot be accommodated in the sample cell 104.

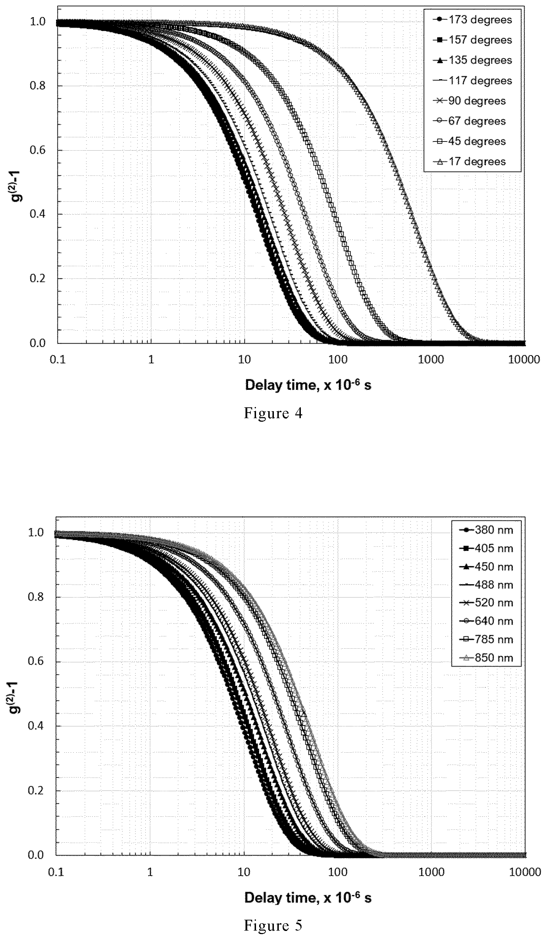

Figure 4 shows intensity autocorrelation functions $\boldsymbol{g}^{(2)}$ (from which the field autocorrelation function can be determined via the equation $\boldsymbol{g}^{(2)} = 1 + \boldsymbol{g}^{(1)2}$), which are determined for an illumination wavelength of 632.8 nm, an $Z_{average}$ size of 0.5nm, and a polydispersity index *pdi* of 0.01. Autocorrelation functions for scattering angles of 173, 157, 135, 117, 90, 67, 45, and 17 degrees are shown (with angles less than 90 degrees denoting forward scatter, angles greater than 90 degrees indicating back scatter and an angle of 90 degrees indicating side scatter).

Figure 5 shows intensity autocorrelation functions $\boldsymbol{g}^{(2)}$ for a $Z_{average}$ size of 0.5nm and a polydispersity index *pdi* of 0.01 and a scattering angle of 90 degrees. Autocorrelation functions for illumination wavelengths of 380, 405, 450, 488, 520, 640, 785, and 850 nm are shown (corresponding with readily available wavelengths of laser diodes). The range of q vector can be inferred from a comparison of Figure 4 and 5, from which it can be seen that varying the illumination wavelength provides a similar range of q vector to varying the scattering angle from 173 degrees to around 45 degrees, which is a very useful range.

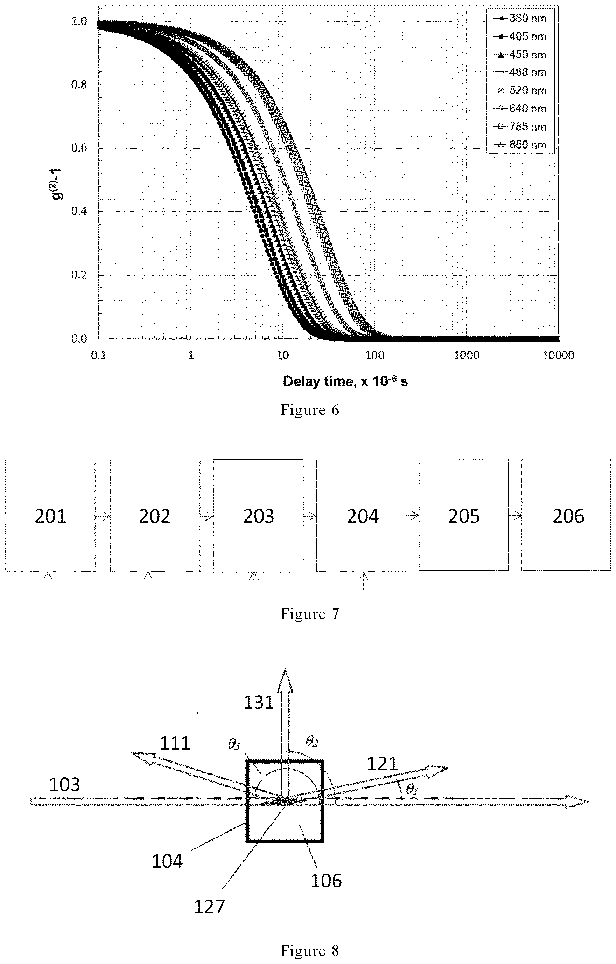

Figure 6 shows intensity autocorrelation functions $g^{(2)}$ for a $Z_{average}$ size of 0.5nm and a polydispersity index *pdi* of 0.01 and a scattering angle of 173 degrees. Autocorrelation functions for illumination wavelengths of 380, 405, 450, 488, 520, 640, 785, and 850 nm are shown. The range of q vector can again be inferred from a comparison of Figure 4 and 6, from which it can be seen that varying the illumination wavelength provides a similar range of q vector to varying the scattering angle from 173 degrees to around 45 degrees.

A numerical comparison of the q vector ranges explored by varying the scattering detection angle and the illuminating light beam wavelength is illustrated below:

| Scattering angle, $\theta$, degrees | sin $(\theta/2)$ | Wavelength, $\lambda$, nm | $1/\lambda$ |
|---|---|---|---|
| 17° | 0.1478 | 380 | 0.00026 |
| 173° | 0.9981 | 850 | 0.00012 |
| sin(17°)/sin(173°) | 6.8 | 850/380 | 2.24 |
| $\sin^2(17°)/\sin^2(173°)$ | 45.6 | $850^2/380^2$ | 5.02 |

In the case of static light scattering measurements, the Zimm equation is:

$$\frac{Kc}{R(q,c)} = \frac{1}{M_W}\left(1 + \frac{q^2 R_g^2}{3} + 2Q_{LS}(q)A_2 M_W c + \cdots\right) \qquad (4)$$

where,

$$K = \frac{4\pi}{N_A \lambda^4} n(\lambda)^2 \left(\frac{dn(\lambda)}{dc}\right)^2 \qquad (5)$$

where $\frac{dn}{dc}$ is the refractive index increment, $\lambda$ is the free-space wavelength of the illuminating light source, $N_A$ is Avogadro's constant, c is the sample concentration, $R_g$ is the radius of gyration of the dispersed phase, $M_W$ is mean molecular weight and $A_2$ is the 2nd virial coefficient. $Q_{LS}(q)$ does deviate from unity but not significantly in the region of the y-axis intercept and therefore the deviation can be ignored for most applications. Since each value in Eq.(4) is either independent of $q$, a function of $q$, or of the wavelength, $\lambda$, analyses in which the wavelength is varied are essentially equivalent to analyses in which the scattering angle is varied.

Multiple instances of Eq.(4) may be set up as an optimisation problem for non-linear regions of the Zimm equation: the data obtained from scattering at more than one wavelength may be fitted to the Zimm equation to determine a radius of gyration, and/or a molecular weight and/or a second virial coefficient. Significantly reduced uncertainties in characterisation of particle characteristics are associated with the simultaneous recording of all measured quantities from the same scattering region (may also be referred to as scattering volume) of the same sample and for time-resolved applications, which are not accessible by sequential, multi-setting measurements performed on the same aliquot.

A relatively small number of detection angles can be used in such an instrument - for example only a single detection angle, 2 or fewer, 3 or fewer, 4 or fewer, 5 or fewer or 6 or fewer detection angles. A "detection angle" here refers to a scattering angle corresponding with a centroid of an active area of a light detection element. Multiple detection elements at different positions allow different scattering angles to be detected.

Figure 7 illustrates a method for performing particle analysis using a multiplicity of wavelengths.

At step 201 a polyspectral light source produces light with at least three different wavelengths. The light source may comprise a plurality of laser emitters, each having a different wavelength. Each emitter of the light source may comprise a source of spatially coherent light, but this is not essential. The light source is preferably configured to simultaneously produce each of the at least three different wavelengths of light. The light source may alternatively be configured to sequentially illuminate the sample with different wavelengths of light and the light source may be configured to enable a selection of one or more wavelengths of light with which to illuminate the sample at any given time.

At step 202, a sample (comprising particles suspended in diluent) is illuminated by light from the light source. The light illuminating the sample in this step may comprise at least three different wavelengths. The different wavelengths of illuminating light may have a common illuminating optical path in the sample, so that the centre of the beam in the sample for each wavelength is coincident and parallel. In other embodiments, each illuminating wavelength may use a different beam path to illuminate a common region of the sample. In such embodiments no more than 6, or 5, or 4, or 3, or 2 different illumination beam paths may be employed.

At step 203, light scattered from particles of the sample is detected. The intersection of the detection optical path with the illumination optical path defines a scattering volume, from which light scattered from particles is detected. Scattered light arising from each wavelength of illumination is preferably detected along a common detection optical path in the sample. This is not essential and in some embodiments there may be different detection optical paths in the sample for different wavelengths. It is also possible to combine multi-angle with multi-wavelength analysis: there may be a plurality of detection optical paths in the sample (each corresponding with a different scattering angle), each detection path configured to receive scattered light from each of the multiple illumination wavelengths. There may be 6 or fewer, 5 or fewer, 4 or fewer, 3 or fewer, 2 or fewer, or a single detection optical path in the sample.

In order for the detection step 203 to discriminate between different wavelengths of scattered light (arising from elastic scattering of the illuminating light source), a dispersive element may be provided between the sample and detector. The dispersive element may be configured to separate a common detection optical path from the sample into separate detection optical paths for separate detectors, corresponding with different wavelengths of scattered light. This separation is represented in step 204, but step 204 may also be regarded as part of the detection step 203.

In step 205, an analysis of the detected scattered light is performed. In the case of dynamic light scattering, an autocorrelation function may be determined from the time history of intensity of scattered light and the particle characteristics inferred from the autocorrelation function (as explained above).

In step 206, the results of the analysis performed in step 205 are reported to a user, for example in a result file and/or displayed on a computer screen.

The dotted lines between the steps depicted in Figure 7 indicate potential active or adaptive feedback loops. For example, the wavelengths of the light source, the number and specific angles of one or more detection optical paths in the sample, the spectral dispersion etc may be modified in response to analysis results obtained in step 205 (or raw detected results obtained in step 203).

Figure 8 shows a generalised optical scheme according to an embodiment. The sample 106 is illuminated with a spatially coherent and co-aligned illumination beam 103 that is polyspectral. The term polyspectral may refer to a spectrum comprising a continuous band of wavelengths (over which non-negligible power is emitted) of >50nm or >100nm or >200nm or >500nm. A non-negligible amount of power may be a power spectral density of at least 10% of the peak power spectral density or at least 5% of the peak power spectral density. Alternatively, a plurality of narrow band discrete wavelengths may be present, from different light emitters. Each narrow discrete wavelength may have a linewidth of <20nm (FWHM) or <10nm or <5nm. In either of these arrangements, the light at the different wavelengths may have the same polarisation state (e.g. vertical linear polarisation, horizontal linear polarisation etc).

In any of the embodiments described herein, a polarisation selector may be provided, configured to select a polarisation state for the multi-spectral illuminating light beam. The polarisation selector may be operable to control the Stokes vector of the illuminating light beam (i.e. control over linear, circular, elliptical, handedness of the polarisation state). The use of a polarisation selector on the illumination optical path may enable Mie scattering ellipsometry to be performed (by sequentially selecting different polarisation states for analysis). A further polarisation selector may be provided on the detection optical path (in any of the embodiments described herein), so that the polarisation state of the detected light may be selectable. It may also be advantageous to simply collect all polarisations of scattered light.

As shown in Figure 8, at least one of three detection optical paths 111, 121, 131 may be used: a backscatter detection optical path 111, a forward scatter detection optical path 121 and a side scatter detection optical path 131. Some embodiments may be configured to simultaneously detect light scattered along each of (or two of) these detection optical paths, and some embodiments may be configured to select a detection optical path to detect from three or two of these options (e.g. in a fibre coupled system employing an optical switch between a detector and the various detection optical paths).

As already noted, a scattering volume 127 can be defined as the intersection between an illumination optical path and a detection optical path. The scattering volume will be larger for scattering angles that are more parallel to the illuminating light beam. A relatively small scattering volume will conversely result from a side scatter detection optical path.

Multi-q analysis in which a variation in q values is obtained by varying the wavelength of the illuminating light beam is applicable to a wide range of measurement contexts.

Well plate measurements

A well plate sample holder (comprising an array of sample holding wells) may be preferable in a high throughput analysis environment, for example in biopharmaceutical research. Prior art instruments for performing DLS on samples in well plates have been limited to single angle (single scattering vector, q) analysis. Alternative techniques have previously been applied to complement such single angle/scattering vector DLS (for example to resolve mixtures of particles). Prior art MADLS measurements performed in cuvettes can provide more insight, but the time associated with preparing samples in cuvettes, loading and unloading and supervising measurements have previously been a significant barrier in applying MADLS analysis in a high throughput environment.

Well plates are available with a wide range of wells per plate, from 6 to 1536, with 96, 384 and 1536 wells per plate common for pharmaceutical screening measurements, a potential application for this technology. In addition to the small diameter and depth of the well sizes associated with these plate formats, there is also a desire to minimise the sample volume for reasons of bulk sample availability. Plate-based measurements may be considered to be spatially restrictive. However, the range of particle sizes required to be characterised for pharmaceutical screening ranges from > 1 nm for native materials up to microns for aggregated or otherwise spoilt material. Such spoilt material may be created during thermal degradation studies, for example, or may be associated with spurious fractions, with examples including purification column or filter spoil. Therefore, the advantages associated with the range of autocorrelation delay times and the benefits of MADLS apply, and a polyspectral measurement that can be performed along a common illumination and a common detection optical path in the sample provides a clear advantage for unknown samples of these types.

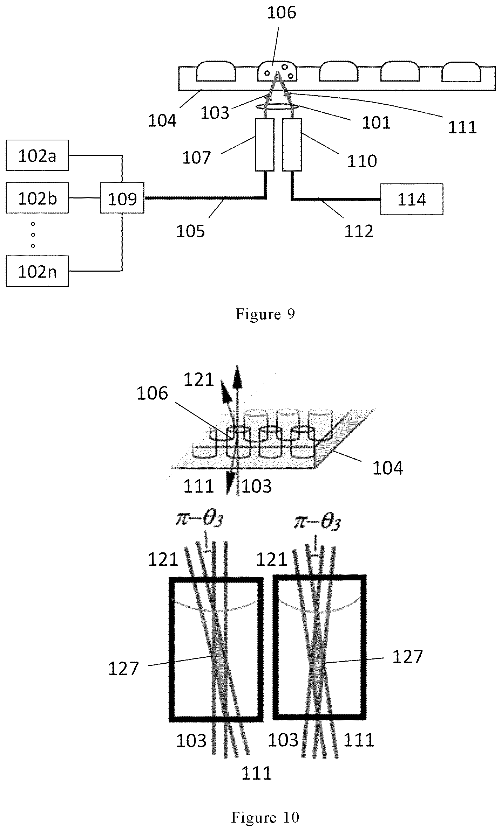

Additionally, a polyspectral measurement may provide SLS and DLS measurements from each of the multiple columns (e.g. size exclusion chromatography columns) in protein purification applications, thereby providing a time-resolved measurement of the process with potential savings of valuable material. In such a context, the illumination may be through the bottom of a well plate, and backscattered light may be detected. Figures 9 and 10 show an embodiment comprising a sample holder 104 that comprises a well plate. Each well in the well plate may hold a sample 106 (only one is shown for ease of understanding). A light source comprising a plurality of light emitters 102a, 102b... 102n (e.g. laser diodes) and a beam combiner 109 is provided. The beam combiner 109 combines illumination light from any of the light emitters 102 onto a common illumination path, which comprises an illumination optical fibre 105. The beam combiner 109 may comprise beam splitters or dispersive/diffractive elements. Free space optics may be used, or light may be fibre coupled from the light sources, and combined via a fibre combiner. An illumination coupling lens 107 couples light from an illumination optical fibre 105 into a free space illumination beam 103, which is directed by a focussing lens 101 into the sample 106.

Back-scattered light from the sample 106 is detected along a detection optical path 111 that is collected by the focussing lens 101 into a collection coupling lens 110 and into a detection optical fibre 112. The detection optical fibre 112 couples the scattered light to the detector 114, which may comprise a photon counting detector.

This embodiment uses a common focussing lens for both illumination and detection optical paths, but this is not essential, and a focussing lens may be provided for each of the illumination and detection optical paths. Where separate illumination and detection focussing lenses are provided, each of these lenses may be oriented with its axis parallel with either the illumination or detection optical path (respectively). Although fibre coupled illumination and optical paths have been described, in other embodiments free space detection and/or detection optical paths may be used.

Illuminating the sample 106 with multiple selectable wavelengths (for example more than three) enables a multi-q measurement (as described above) to be taken that may produce comparable results to a multi-angle dynamic light scattering measurement. Using a single detection angle to perform a measurement makes the instrument simple, and facilitates MADLS-like analysis to be performed on a well plate in a relatively low cost instrument. The instrument may comprise a translation stage configured to control automated sequential multi-q DLS analysis of multiple samples in different well positions. The focussing lens (or lenses) 101 may be mounted on a translation stage to enable the focal position of the detection and illumination beams to be adjusted, so as to change the location of the volume from which scattered light is detected (e.g. to adjust the distance of this scattering volume from the base of the well plate). For example, moving a scattering volume closer to the base may be appropriate to reduce multiple scattering from highly turbid samples.

Figure 10 shows in more detail the intersection between the illumination optical path 103 and a back scatter detection optical path 111 and a forward scatter detection optical path 121, along with the resulting scattering volume 127. The illuminating light beam 103 may be vertical, or near vertical.

The characteristic well size & shape and the sample temperature and composition may generally result in a complex, curved fluid surface, or meniscus, at the top of the sample within a well of a well plate. It is known that some single wavelength, single physical detection channel, commercial instruments 'hunt around' the well, looking for a sweet spot based on aspects of the measured data quality at these locations.

Adaptive correlation is known to provide both superior measurement data metrics and significantly shorter measurement times in comparison to traditional DLS instruments; however, even for an adaptive measurement, the additional time taken to scan for an ideal measurement position within the well may not be compatible with short measurement times, such as those characteristic of pharmaceutical screening.

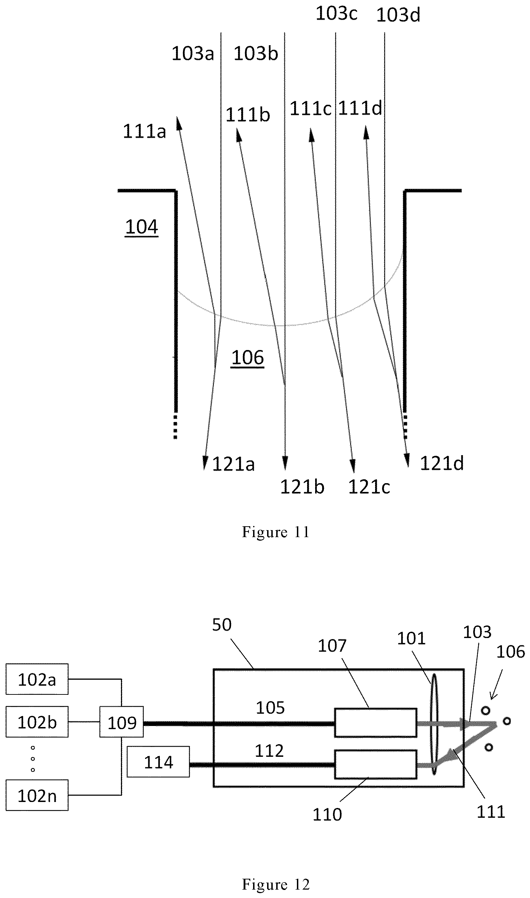

Figure 11 illustrates a multi-path and multi-wavelength illumination optical path 103a-d illuminating a sample in a well of a well plate from above. Forward scatter detection paths 121a-d and backward scatter detection paths 111a-d are shown (one of these paths can be omitted - the instrument may be configured for back scatter or forward scatter detection or both).

Each physical illumination and detection path carries polyspectral light of an arbitrary polarisation state. This enables a multi-point measurement that is equivalent to MADLS or SLS measurement, significantly increasing the addressable volume of the sample thereby providing an increase in statistical confidence that the measurement is representative of the bulk and also significantly reduced measurement times for fast dynamics within the sample; for example, to provide higher time-resolution measurements for thermal degradation studies and an attendant improvement in precision and accuracy of the aggregation temperature.

The illuminating light beam and scattered light beams will be refracted towards the surface normal when passing from less optically dense to more optically dense regions; therefore, a range of physical q vectors are created of unknown magnitude by the unknown form of the sample meniscus.

Since the sample in the well is of limited volume it is a reasonable assumption that the composition of an undisturbed sample or the steady state of the sample, is homogeneous throughout the well. In this case a fit over the resulting measurement data, or where the resulting data are analysed as part of a mathematical optimisation problem, could be used to improve the resulting estimate of the particle size distribution. For example, a fit may be obtained to quantities obtained from the data with respect to measurement position over the surface. A first derivative of the fit will show the rate at which the measured quantity varies with position, which may make it easy to determine the location that is least affected by refractive optical effects (i.e. the region with the lowest first derivative). A measurement from this location may provide a good estimate of the sample characteristics (that is least effected by refractive optical effects).

Such a scheme may also be advantageous when the sample is illuminated from below, i.e., via the well plate base. In this case Fresnel back-reflections from the meniscus may cross the detected volume. For a sufficiently coherent light source, this may create a coherently summed illumination that is not the same as the primary illumination path in isolation, with attendant uncertainties in the resulting q vector and measured quantities. This technique is applicable to a monochromatic measurement, but key additional data are accessible using a polyspectral measurement with multiple polarisation state data available from each detection point, due to the polarisation state dependence of Fresnel's equations and the wavelength dependence of the refractive index of the sample.

Further, for either single or multiple physical illumination and detection paths or some combination of them, such as a single illumination path with accompanying multiple detection paths, a multiplicity of polarisation states can be illuminated and detected over a range of wavelengths so that polyspectral measurements, Mie scattering ellipsometry and/or polarisation sensitive dynamic light scattering measurements are enabled directly within a well-plate.

Optical probe based measurements

Probe based measurements may be useful in many contexts, for example in process monitoring. It has hitherto been very difficult to construct a probe based instrument for performing DLS that can generate scattering data for more than one scattering vector. Typically, probe based DLS instruments have been limited to a single back-scattering angle. Embodiments of the present invention enable multi-q DLS to be performed with a single angle probe based instrument.

Figure 12 shows an example embodiment comprising a probe 50. The probe 50 comprises illumination coupling lens 107, detection coupling lens 110, and common focussing lens 101. Illuminating light is provided to the probe 50 by an illumination optical fibre 105, from a light source with the features described with reference to Figure 9 (i.e. a plurality of light emitters 102a, 102b... 102n (e.g. laser diodes) and a beam combiner 109). The scattered light is directed to a detector 114 (e.g. a photon counting detector) by the detection optical fibre 112. In common with the well plate example, the expansion of scattering vectors that are sampled enables a "MADLS like" multi-q measurement to be obtained from a simple probe based measurement setup. Such a probe based measurement arrangement may be used in contact with the fluid comprising the sample, or in a non-contact mode in which the sample is illuminated through a wall of the sample holder.

The example of Figure 12, in which there is a single lens (for illumination and detection optical paths 103, 111 respectively), would result in a wavelength specific beam waist-of-focus of both illumination and detection paths (because for a given focal length the beam waist depends on the wavelength of the beam). For relatively small ranges of wavelengths the overall uncertainty associated with a manufactured part and/or optical aberrations may result in a close approximation to an identical detected volume for all wavelengths. Where the variation in wavelength for the illumination light is sufficient to cause the onset of a wavelength dependent detection volume size, the dependence could be calibrated out or pre-compensated (as explained below).

Alternatively, schemes intended to design out the dependence of beam waist on wavelength are possible. A specific example is based on the chromatic nature of a single-mode step-index fibre fundamental mode or, conversely, the achromatic mode size associated with photonic crystal fibres, which may be used to compensate for the polychromatic propagation and focussing of Gaussian beams.

In common with the embodiment of Figure 9, separate focussing lenses may be used as an alternative to a common focussing lens. In some embodiments the focussing lens (or lenses) may be replaced with one or more focussing mirrors.

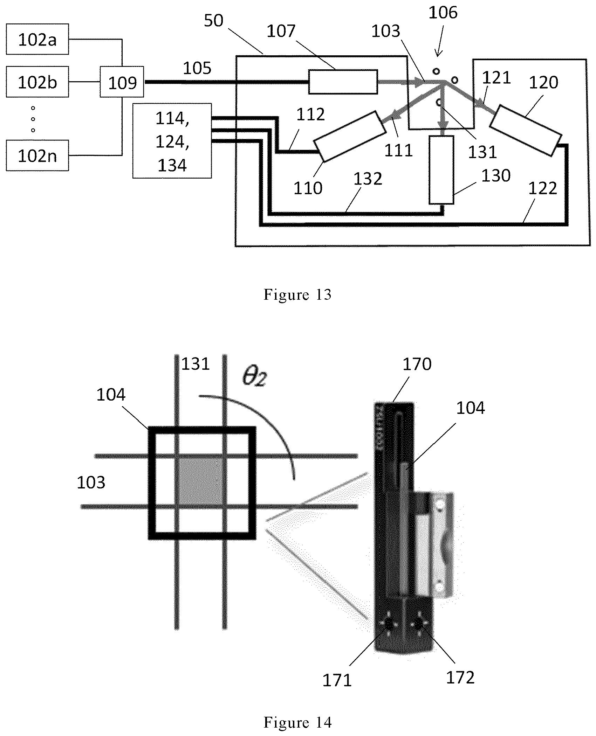

A shown in Figure 13 it is possible to mount multiple optical components, e.g., lenses, lens arrays, mirrors, in a probe 50, so that multiple, polyspectral measurement channels (which may have any arbitrary polarisation state), could be accommodated.

Such probes may be used in invasive applications where the probe is in contact with the fluid sample, or non-invasively such as focused through the wall of a sample holder such as a cuvette, slide, pipe, reaction vessel, or any other appropriate container.

For example, a probe configured to detect forward scattered light would facilitate a method of probe based electrophoretic light scattering if the sample under investigation was subject to an applied electric field, either outside of the probe or via electrodes incorporated in the probe. An advantage of the forward scattering angle for electrophoresis measurements is that the diffusion spectrum is minimised in width as the scattering angle approaches zero degrees, i.e. in the same direction as the illuminating light path, so that its impact on either an autocorrelated (e.g. DLS) or phase analysis light scattering measurement is minimised. Similar arguments exist for magnetophoresis measurements where an additional uncertainty is associated with the need to align the scattering volume at a magnetic field location of specific field strength and first (spatial) derivative.

Similar comments associated with the polyspectral and polarisation states of the illumination and detected light apply to probes with respect to controlling or assessing the impact of Fresnel reflections, e.g., from an inspection window in a pipe, from the glass of a laboratory beaker or reaction vessel, etc, and also for depolarised dynamic light scattering (DDLS) and Mie scattering ellipsometry applications.

Figure 13 shows an example embodiment of a probe based measurement arrangement that samples multiple scattering angles. The probe 50 comprises an illumination coupling lens 107; and first, second and third detection coupling lenses 110, 120, 130. Similar to Figure 12, the probe receives illuminating light, via an illumination optical fibre 105, from a light source comprising a plurality of light emitters 102a, 102b ... 102n (e.g. laser diodes) and a beam combiner 109. The illumination coupling lens 107 is configured to focus the illuminating light beam 103 in the sample 106 at a scattering volume. The detection coupling lenses 110, 120, 130 focus the first, second and third detection optical paths 111, 121, 131 from the scattering volume. In this example the first, second and third detection optical paths respectively correspond with backscatter, forward scatter and side scatter, but other arrangements are possible.

A first, second and third detection optical fibre 112, 122, 132 couple the first, second and third detection optical paths to first, second and third detectors 114, 124, 134. In some embodiments a single detector may be provided, with an optical switch configured to switch the detector between the different detection optical paths. A set of scattering data may be obtained by repeating measurements with different illumination wavelength and with different detection optical paths.

Capillary cell based measurements

Capillary DLS is a technique that restricts the sample volume within an optically clear capillary to suppress the convective motion associated with the active temperature control required of dynamic light scattering measurements. Typically, the internal dimensions of a capillary make it difficult to accommodate detection angles that differ significantly from 90 degrees (because the scattering volume subsequently becomes difficult to fit in the internal space available). A typical internal diameter (or cross sectional size) for a capillary tube is below 1mm. Optical path widths for DLS have to be sufficiently large to create a non-negligible sample volume to avoid number fluctuations and smaller beam widths make problems of alignment more difficult to solve.

Cuvette type cells can enable thermal degradation studies in which the uncertainty in the temperature across the limited sample size is negligible. The very small sample volume associated with capillary cells allows an improvement in measurement confidence (by enabling multiple measurements) which may be relevant in pharmaceutical development. Such samples may be expensive and/or have low availability.

Capillaries having small internal diameters also limit the potential for multiple scattering. Further, since multiple-scattering effects are known to be particle size and concentration dependent it may also be possible to estimate the multiple-scattering component from signals from different wavelengths, and thence calculate the underlying primary particle size distribution.

A polyspectral light scattering measurement from the same detected volume at a 90 degree (or near 90 degree) scattering angle enables measurements equivalent to MADLS to be performed even in cuvettes with small internal dimensions. The inclusion of a polarisation selector on the illumination optical path or the detection optical path enables Mie scattering ellipsometry, polarisation sensitive dynamic light scattering and quantum correlated measurements. These advantageously provide attendant additional sample information and data confidence for measurements undertaken using a capillary cell.

Figure 14 illustrates a capillary cell 104, illuminated by an illuminating light beam 103 along an illumination optical path. The capillary cell 104 is illustrated as square in cross section, but this is not essential and a curved (e.g. circular) or rectangular cross section capillary may also be used. The internal diameter of the capillary may be 2mm or less, or 1mm or less. The detection optical path 131 is arranged to collect side-scattered light - at a scattering angle of approximately 90 degrees from the illuminating light beam in the sample.

Preferably, a single instrument may be configured to receive conventional cuvette sample cells (which may have external cross sectional dimensions of more than 8mm, more than 10mm or more than 12mm) and also to receive a capillary carrier 170 (with the same external dimensions as the conventional cuvette) which enables the same instrument to perform a capillary cell measurement. The capillary carrier 170 comprises a holder for supporting a capillary cell 104 in an illumination optical path 103 (i.e. in the optical path of the illuminating light beam) and a detection optical path 131. The capillary carrier 170 comprises windows 171, 172 for the illumination optical path and detection optical path respectively.

Electro/magneto-phoresis measurements

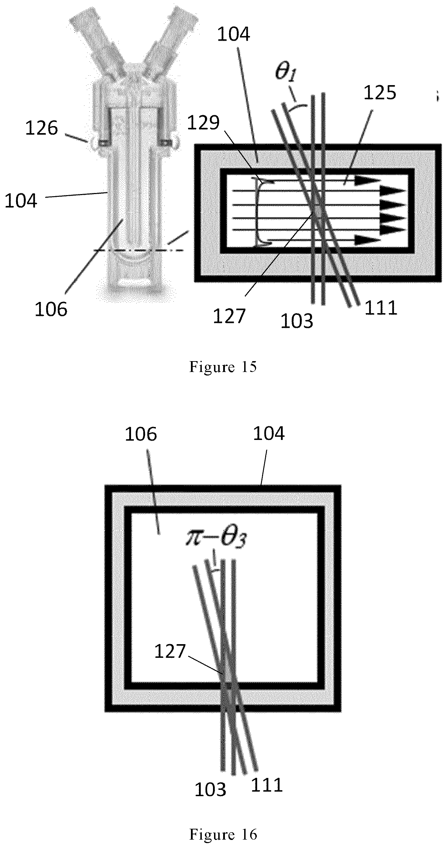

Figure 15 shows a sample cell 104 suitable for electrophoretic measurements, for example to determine a surface zeta potential. The sample cell 104 comprises a generally U-shaped internal volume, with an electrode 126 at the top of each side of the U-shape. The electrodes 126 can be used to produce an electrical field in the sample, which may result in electro-osmotic sample flow. The electrical field lines 125 in the region of the bottom of the U-shaped internal volume are illustrated in the inset graphic in Figure 15, along with a flow profile 129 resulting from a fast-field reversal in a closed capillary. An example illumination optical path 103 and detection optical path 111 for detection of backscattered light from the cell are shown. Alternative arrangements are possible in which the detection optical path is arranged to detect side-scattered light and/or forward scattered light (either in addition to, or as an alternative to detection of back-scattered light).

Of particular importance for a closed capillary are the effects associated with the distribution of the electric field in and around the detected volume. A backward travelling electro-osmotic fluid flow component is associated with a closed capillary and 'fast' electric field reversal schemes which act to suppress the impact of electro-osmotic motion from the cuvette walls across a central region of the sample cell. However, this process is not complete and the collection of light scattering from a centralised region, away from close-wall effects, is desirable. This is a consideration for all closed cells but is of particular note for high concentration zeta potential measurements which utilise a reduced optical path length cell to accommodate higher sample concentrations.

The width of the diffusion spectrum is a function of the q vector. One of the advantages of forward scattering for electrophoresis measurements is that it reduces this spectral width in comparison to the spectral shift associated with the electrophoretic motion for an autocorrelated measurement. Similar considerations also apply to phase-based measurements, although the analysis is more difficult to interpret. However, because of the relatively few data points available from the diffusion spectrum (due to its comparatively reduced spectral width), fitting the diffusion spectrum and removing it from the measurement is not typically performed in any commercial instrumentation. A wavelength that is different to that used for an electrophoresis or magnetophoresis measurement, as disclosed herein, may be used to create a fit to a wider diffusion spectrum. This may result in an improved estimate of the diffusion co-efficient. If measurements of each wavelength are performed at the same time, the same sample can be analysed for both measurements.

Since the scattering intensity in the Rayleigh regime is proportional to the fourth power of the wavelength, the selection of a different wavelength may be used to better match the rule of thumb that a 10:1 ratio should be used as the ratio of intensity of a reference beam and the intensity of the scattered light beam. A reference beam generally refers to a small portion of the illumination beam that has been extracted, such as by a beam splitter, before the illumination beam illuminates the sample. Varying the wavelength of illumination in order to better match this ratio may simplify the instrument and avoid the need for a variable reference beam intensity (e.g. a variable attenuator in the beam path of the reference beam).

Standard cuvette based measurements

Figure 16 illustrates a standard cuvette cell 104 containing a sample 106, with an illumination optical path 103 and a backscatter detection optical path 111 defining a scattering volume 127 at their intersection. The scattering volume 127 in this example is disposed near to the wall of the cell 104.

For back-scatter detection arrangements it is possible to use either an independent lens for each of the illumination and detection optical path, or a common lens for both illumination and detection optical paths. The common lens may define a scattering angle of the detection optical path (by the focal length of the lens and the position of the detection optical path). The position of the common focussing lens may define a position of the scattering volume - moving the common lens relative to the sample cell will adjust the position of the scattering volume within the cell. Particularly in pharmaceutical development and manufacturing, there may be a desire to avoid movement of the sample cell (whether this is a cuvette, well plate or capillary) to avoid any potential physical shock on the sample, so the common lens may be moveable relative to a fixed sample cell holder.

These approaches are applicable to polyspectral illumination, and in particular to a co-aligned polyspectral illumination optical path. Preferably, the optical design may be appropriately corrected to minimise chromatic aberration effects whilst still producing a well co-aligned polyspectral illumination optical path.

Samples that are too concentrated to measure at the centre of the cell are typically measured near to or partially within the cell wall, in backscatter. This has two primary advantages: i) it foreshortens the optical path length into and back out of the sample thereby reducing the probability of multiple scattering from the sample and ii) lower order multiply scattered relaxation spectra better approximate the single scattering spectra as the scattering angle approaches true backscatter (i.e. 180 degrees from the direction of propagation of the illuminating light beam in the sample). However, using multiple, physical detection paths (with different angles) near-to or within the cell wall in traditional MADLS techniques will result in an additional, sample specific uncertainty, associated with the different sizes, shapes and locations of the detection volume for each detection angle and aspects of the sample itself such as the particle size, concentration, and refractive index difference of the particles to the surrounding dispersant. Conversely, the degree of multiple scattering is known to be wavelength dependent; in particular, longer wavelengths are known to penetrate further into turbid samples. Therefore, arrangements in which polyspectral scattered light is detected along a common detection optical path, as disclosed herein, have a number of potential advantages:

i. the removal of angle specific uncertainties associated with non-invasive backscatter techniques;

ii. the reporting or optimisation of the measurement (such as the measurement position within the cell) on the basis of the degree of multiple scattering present at each wavelength. For example, an optimum autocorrelation function intercept may be found for one, but not all, wavelengths present within the instrument;

iii. the measurement of higher concentration samples at longer wavelengths.

Example implementations

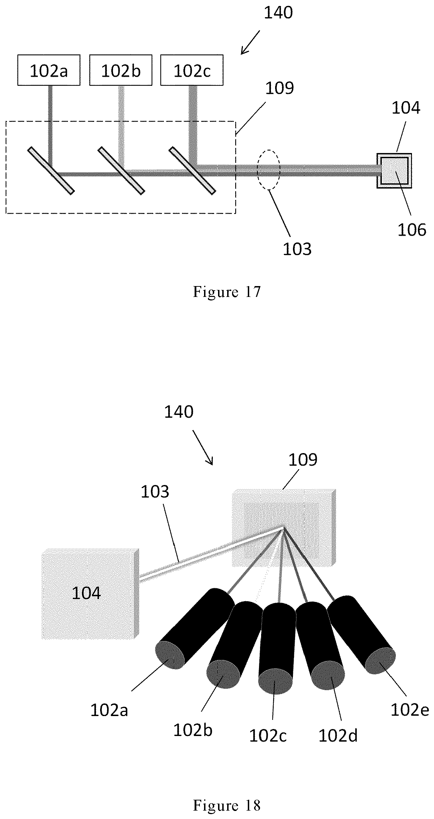

There numerous ways to combine different light beams with different wavelengths. Figure 17 illustrates an example light source 140, comprising light emitters 102a, 102b, 102c (e.g. laser diodes), and beam combiner 109. The beam combiner comprises two beam splitters and a mirror. The mirror receives light from the first emitter 102a (with a first wavelength) and directs it on a common illumination optical path 103 to the first beam splitter (which may, for example comprise a dichroic mirror). The first beam splitter combines light from the first light emitter 102a by transmitting it with light that is reflected by the first beam splitter from the second emitter 102b. The combined light from the first and second light emitters 102a, 102b are directed to the second beam splitter, which combines the light from the first, second and third light emitters 102a, 102b, 102c by transmitting the light from the first and second light emitters and reflecting light from the third light emitter.

Using beam splitters in this way will result in loss of the part of the beam that is reflected from each beam splitter. This approach, while simple, may not be optimal.

An alternative approach to combining illumination beams with different wavelengths into a common illumination optical path, thereby defining a polyspectral illumination beam, is to use a dispersive element.

Figure 18 illustrates this approach schematically, showing a light source 140 comprising light emitters 102a-e, beam combiner 109 (in the form of a dispersive element), polyspectral illumination optical path 103 and sample cell 104. Each light emitter 102a-e emits a light beam with a relatively narrow wavelength band (e.g. <20nm or <10nm FWHM) centred at different wavelengths. Each light beam is incident on the dispersive element 109 at a different angle, such that the dispersion at the dispersive element brings all of the illuminating light beams onto a common, polyspectral, illumination optical path 103. The dispersive element may be a diffraction grating, for example.

Scattered light returning from the sample cell 104 may be dispersed by the same dispersive element onto a spatially separated set of detector elements, thereby allowing scattering at different wavelengths to be separately detected.

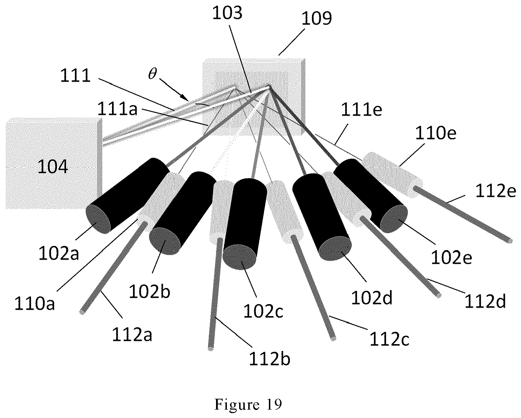

Figure 19 illustrates this showing, in addition to the elements discussed with reference to Figure 18, backscatter detection optical path 111 being dispersed by the dispersive element 109 into detection optical paths 111a-e (not all of which are labelled in Figure 19). Each detection optical path 111a-e is configured to receive light scattered along a common detection optical path in the sample (illustrated as backscatter 111 here), albeit at different wavelengths. It is only after the dispersive element 109 that the different detection optical paths diverge into the different respective wavelengths.

The back scattered light is shown as being detected along detection optical paths 111a-e that is collected, respectively, by coupling lenses 110a-e (not all of which are labelled in Figure 19) and optical fibres 112a-e (by one or more detectors, not shown), but free-space arrangements may also be used (and many such arrangements are known from spectrometry). Although a back scatter configuration is depicted here for simplicity, the same dispersive beam combining/splitting approach is applicable to any embodiment (and is especially applicable where illumination beams from multiple narrow band light sources need to be combined to form a common polyspectral illumination beam).

In some embodiments, beam conditioning optics may be used to arrange for the beam waist for each wavelength in the sample to be the same (or nearly so). The beam conditioning optics may comprise one or more beam expander, or one or more coupling lens between the light source and a focussing lens.

Embodiments of the present disclosure enable the detection of scattered light corresponding with a range of different q vector values from the same scattering volume at the same time. This has significant potential benefits over multi-angle approaches to sampling different q vector values, because different scattering angles result in different scattering volumes. The size of the scattering volume may be less than about $0.5cm^3$ (e.g. for a 20mm beam radius before focussing, and assuming a 2.5mm cross over length).

The light source may comprise a plurality of spatially and temporally coherent emitters - such as gas lasers or diode lasers. Some embodiments may be arranged for parallel detection of each wavelength of scattered light. Alternatively, some embodiments may be configured for sequential detection and/or illumination at different wavelengths. For example, a common detection optical path may be employed for each wavelength of scattered light (i.e. without a dispersive element), and the sample sequentially illuminated with different wavelengths of light (e.g. using one or more attenuator or moveable notch filter in the illumination optical path, or by switching light sources on and off). A particular wavelength may be selected from a broadband light source using electro-optic or acousto-optic modulators, piezoelectric mounted mirrors, mirror galvanometers to rapidly switch the path of the illumination optical path and/or detection optical path via different optical filters. Such schemes facilitate a wavelength by wavelength measurement of substantially the same detection volume.

Multiple detectors may be used to detect different wavelengths of scattered light simultaneously. In such an arrangement each detector must be sensitive to the wavelength of scattered light that it is arranged to receive. Each detector, or the optics coupled to each detector, may also incorporate a notch filter at a specific wavelength such that each detector is configured to only detect light of a specific wavelength.

In embodiments where a single detector is used, any difference in sensitivity of the detector to different wavelengths may be accounted for. This may be achieved by including a calibration step from a suitable isotropic scattering standard, such as toluene, and weighting any combined analysis in favour of the component results that are associated with the best sensitivity/signal to noise.

The wavelengths used in embodiments of this disclosure may be different colours of the visible spectrum, i.e., red, green, and blue, but may be anywhere in the range from x-ray to microwave and specifically including the extreme UV, UV, VIS, NIR, IR and THz wavelength ranges.

The autocorrelation function for a DLS measurement is typically reported in normalised format, with $g^{(2)}(\tau) - 1 = 1$ being fully correlated and $g^{(2)}(\tau) - 1 = 0$, being fully decorrelated, and with the y-axis intercept of the autocorrelation function widely interpreted as the signal-to-noise in the measurement. As an example, a sample that fluoresces at the illuminating wavelength will create uncorrelated light in addition to the elastically scattered signal from the refractive index variation in time associated with the diffusion of the dispersed phase. Since the fluorescent signal is uncorrelated it 'adds to the baseline' of the un-normalised autocorrelation function, so that once normalised, the y-axis intercept of the diffusion related component of the autocorrelation function will be much lower than in the absence of an uncorrelated background.

Optical de-correlation effects may also be imparted by the illumination of the scattering volume. The illuminating beam should, optimally, be temporally coherent with itself throughout the scattering volume. We can use this requirement to understand the broad requirements of a detection spectrometer for the application where the sample is illuminated with a polyspectral and therefore incoherent, light source. In this case in order to create a partially coherent field, the spectrometer must have sufficient resolving power,

$$R = \frac{\lambda}{\Delta\lambda} \qquad (7)$$

For this application, a light source with a Gaussian emission spectrum has a coherence length $L_c$ given by:

$$L_c = \sqrt{\frac{2\ln(2)}{\pi n}} \frac{\lambda^2}{\Delta\lambda} = \sqrt{\frac{2\ln(2)}{\pi n}} R\lambda \qquad (8)$$

so that,

$$R > \frac{L_c}{\sqrt{\frac{2\ln(2)}{\pi n}}\lambda} \qquad (9)$$

The scattering volume for matched, representative, illumination & detection $1/e^2$ beam waists of 40 mm and a detection angle of 173 degrees is around 2.5 mm in length, whereas for 90 degrees, it is, $\sqrt{2} \times 40 \times 10^{-6}$, $m = 56.7\mu m$ (across the diagonal). Therefore, the spectral resolution requirements for measurements in aqueous dispersion, $n = 1.33$, are shown below in table 1.

Table 1 - *Spectral resolving power requirements for DLS at various fixed, physical scattering angles and wavelengths in aqueous dispersion*

| Wavelength, $\lambda$, nm | Scattering angle = 90 degrees | Scattering angle = 173 degrees |
|---|---|---|
| 380 | 260 | 11435 |
| 405 | 244 | 10729 |
| 488 | 202 | 8904 |
| 520 | 190 | 8356 |
| 640 | 154 | 6789 |
| 785 | 126 | 5535 |
| 850 | 116 | 5112 |

From Table 1, it is clear that, due to the relatively small size of the detection volume in comparison to the wavelength of the light, the spectral resolving powers vary between ~ $10^2$ and $10^5$. The wavelength dependent nature of spectrograph resolving power can be ignored as an unnecessary complication for this indicative calculation. Commercial spectrometers are available at R~$10^3$ to $10^4$, so the values of Table 1 are readily accessible either with off the shelf options or by modest, bespoke spectrograph designs.

General advantages and applications

In some embodiments, user or automatic selection of an appropriate measurement wavelength may be used to readily identify the specific tracer particles as part of a microrheology measurement, with an enabled application in the characterisation of colloidal or micro-rheological characteristics.

In some embodiments, user or automatic selection of an appropriate measurement wavelength may be used with samples that fluoresce or absorb at specific wavelengths to avoid or target fluorescence or absorption (for example to target or avoid specific fluorophores). This may also be a route towards the characterisation of complex media where distinguishable spectral features could be analysed separately, with applications for laser diffraction, diffractive spectra-polarimetry, dynamic light scattering, depolarised dynamic light scattering (or polarisation sensitive DLS), static light scattering and electro/magneto-phoretic light scattering.

Some embodiments may enable improved precision and accuracy for widely polydisperse samples and for very small particle sizes. Such samples would typically populate very few bins in the autocorrelation function if analysed with a single value for the q vector. Uncertainty in a fit to the autocorrelation function will tend to result from scattering populating a relatively small number of bins in the autocorrelation function (and an attendant increase in uncertainties in quantities that are derived from the fit). Analysis with different q values arising from different wavelengths enables a solution to this problem. The selection of a lower wavelength, either by the user in the measurement standard operating procedure (SOP) or in response the measurement data from the sample, can be used to increase the delay time at which the correlation function falls to the baseline providing more data points to fit to and an improved estimate of derived quantities.

Capillary dynamic light scattering in combination with techniques such as those described in (WO2017/051149) may enable DLS to accurately report particle sizes up to >>10s of microns. Simply reducing a single, factory fitted wavelength risks overfilling the correlator with information from large samples and therefore creating issues with the fit to the baseline of the autocorrelation function which may increase the uncertainty in the measurement due to increased analytical uncertainties.

A polyspectral measurement of light scattered along a common direction in the sample enables the measurement over autocorrelation functions that explore different ranges of a fixed autocorrelation structure, from identically the same sample volume, which may ameliorate at least some of the problems with uncertainty.

For capillary based measurements, the small sample volume can significantly improve the precision and accuracy of the multi-q DLS measurement due to negligible variation in sample temperature across the 2 microlitre sample.

Similarly, comments are applicable to SLS measurements. A noted challenge for SLS relates to detection sensitivity variation over different detection angles. Such variation may be caused by geometric differences in the detection volume and due to variability in the placement and replacement of Toluene (for calibration) and sample cuvettes. These variabilities are potentially mitigated by the use of a common detection optical path for each sampled q value.

For SLS, it is possible to construct a partial Zimm plot from a variation in sample concentration in a batch cuvette system. In embodiments of the present disclosure a multiplicity of simultaneously detected q vectors may be present, allowing an improved estimate of $M_W$ without serial dilution, and providing a robust measurement of Rg in a single measurement.

Embodiments of the present disclosure also enable time-resolved measurements of SLS measurands for the first time (e.g. in a batch measurement system) which will allow the automated titration of the sample on much shorter timescales.

Embodiments of the present disclosure enable access to the polyspectral cross-correlation of multiple wavelengths which may be used to suppress multiple scattering from identically the same sample, which is applicable to time-resolved applications.

In certain embodiments, cross correlation may be employed on the scattering data obtained at different wavelengths (where the detection optical path is common and the scattering volume for each wavelength is the same). It is known that such cross-correlation can suppress multiple scattering. Such cross correlation may be performed over multiple pairs of wavelengths in order to improve the fit. In addition, Mie scattering minima may be avoided by the selection of suitable wavelengths. Such Mie scattering minima may exist for particles in the very low micro-scale (<10 um), but which nonetheless remain dispersed and diffusing.

In some embodiments the illuminating light beam may be detected after it has passed through the sample, for example in an additional detection optical path that is fed to a spectrometric detector arrangement. Measurements may be performed on the dispersant without the particulate sample and subtracted from measurements of the dispersant with the particulate sample to determine an absorption spectrum of the sample.

Some embodiments may be configured to perform polarisation sensitive dynamic light scattering, thereby enabling various aspects of nanoparticle shape to be determined from multi-q, polarisation state sensitive measurements. These can typically be achieved with sequential analysis in instruments with single q vector detection (e.g. single wavelength single angle). Embodiments of the invention allow the necessary scattering information to be obtained concurrently, enabling time-resolved characterisation of parameters in response to stimulus such as changes in temperature or sample chemistry. Such analyses may be useful in colloidal characterisation.

A measurement via a single physical detection optical path employing a polyspectral illumination beam with a plurality of polarisation states can be used to perform laser diffraction, diffractive spectra-polarimetry and quantum-correlated light scattering measurements. A particular advantage may be that nanoscale materials are typically difficult, dangerous, or environmentally or medically unethical to collect in large quantities, so that laser diffraction measurements in well-plates, or cuvettes, or from probes, is of particular advantage.

An additional application of this would be the simultaneous recording of laser diffraction and DLS data to provide an indirect measurement of the extent of an electrical double layer, which becomes a dominant factor for the interactions of particles amongst themselves and their environment in the nanoscale.

As described with reference to Figure 12, the use of a common focussing lens for different wavelengths of light may result in different scattering volumes. The size of a beam waist $\omega$ at the focal point of a lens with focal length $f$ is given by:

$$\omega = \frac{f\lambda}{\omega_{lens}\pi n} \qquad (10)$$

where $\omega_{lens}$ is the beam width at incidence with the focussing lens, and A is wavelength of the beam.

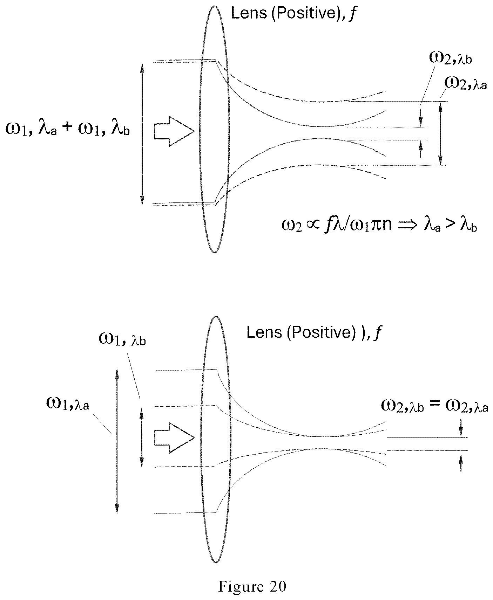

In order to produce the same sized beam waist for each wavelength of illuminating light using the same focussing lens, the illuminating beam width at incidence to the focussing lens may be adjusted to compensate for the difference in beam width at the focal distance from the lens. This is illustrated in Figure 20. Figure 20 shows (top) a focussing lens with two illuminating light beams with different wavelengths and similar beam widths at incidence to the focussing lens, which results in beam waists that are different (in the sample holder, not shown). Figure 20 further shows (bottom) two illuminating light beams with different wavelengths but with beam widths at incidence with the focussing lens that are selected to produce the same beam waist size at the focal distance from the lens. A beam expander may be used to adjust the beam width of a light beam to pre-compensate for differences in wavelength at incidence with the focussing lens.

This beam width pre-compensation may be employed in any of the embodiments, so that the scattering volume interrogated by each wavelength of the illumination optical path and/or the detection optical path are the same.

The example embodiments are not intended to be limiting. The skilled person will appreciate that variations are possible, within the scope of the appended claims. The features of each embodiment may be combined with the features of each other embodiment. For example, details of an optical path that are described with respect to a well plate arrangement may also be applied to a probe, cuvette, capillary or other sample holding arrangement.

**Claims**

1.  A particle characterisation instrument, comprising:

    a light source configured to illuminate a sample holder with an illumination beam along an illumination optical path so as to produce scattered light from the interaction between the illumination beam and a sample on/in the sample holder;
    at least one detector configured to detect the scattered light;
    a processor configured to receive a detector signal from the at least one detector and to determine a particle characteristic therefrom;
    wherein the light source is configured to produce a polyspectral illumination beam comprising at least three different wavelengths.

2.  The instrument of claim 1, wherein the processor is configured to perform:

    a dynamic light scattering measurement by performing a fit to scattering data obtained from the at least one detector signal at two or more of the at least three different wavelengths, or
    a static light scattering analysis in which at least one of a radius of gyration, a molecular weight and a second virial coefficient are determined from a fit to the Zimm equation performed over two or more of the at least three different wavelengths.

3.  The instrument of claim 2, wherein the instrument is configured to perform a multi-q dynamic light scattering analysis, and the processor is configured to solve an equation of the form:

$$\begin{bmatrix} g^{(1)}(q_1) \\ \cdots \\ g^{(1)}(q_n) \end{bmatrix} = \begin{bmatrix} \alpha_1 K(q_1) \\ \cdots \\ \alpha_n K(q_n) \end{bmatrix} x$$

    wherein:
    $g^{(1)}(q_i)$ is a measured correlation function for scattering vector $i$, corresponding with a scattering vector $q_i$, $K(q_i)$ is an instrument scattering matrix computed for the scattering vector $q_i$, x is a particle size distribution and $\alpha_i$ is a scaling coefficient for scattering vector $q_i$.

4.  The instrument of claim 3, wherein the instrument is configured to perform the multi-q dynamic light scattering analysis from scattered light that is scattered along a common detection optical path in the sample.

5.  The instrument of claim 4, wherein the common detection optical path corresponds with back scattered light.

6.  The instrument of claim 3, wherein the at least one detector is configured to detect scattered light at multiple different scattering angles, and the multi-q dynamic light scattering measurement is determined with reference to q vectors that correspond with more than one scattering angle and more than one wavelength of scattered light.

7.  The instrument of any preceding claim, wherein the at least one detector is a single detector.

8.  The instrument of any preceding claim, wherein the light source comprises a plurality of light emitters having different emission wavelengths, configured to illuminate the sample along a common illumination optical path in the sample so that the scattering angle or angles detected by the at least one detector for each wavelength is substantially the same.

9.  The instrument of any preceding claim, wherein the sample holder comprises a well plate, a capillary or a slide.

10. The instrument of any preceding claim, wherein the sample holder comprises a well plate with a plurality of sample holding locations, and the instrument comprises a translation stage configured to move the sample holder relative to the illumination beam to automatically analyse samples in a plurality of the sample holding locations.

11. The instrument of any preceding claim, further comprising beam conditioning optics arranged to provide an illumination beam waist in the sample that is the same for each wavelength.

12. The instrument of any preceding claim, further comprising a dispersive element and the light source comprises a plurality of light emitters having different emission wavelengths, wherein the illumination optical path from each light emitter to the sample is dispersed onto a common illumination optical path in the sample by the dispersive element.

13. The instrument of claim 12, wherein a detection optical path from the sample to each of the at least one detectors includes the dispersive element.

14. The instrument of any preceding claim, wherein the particle characteristic comprises at least one of a particle size, particle size distribution, polydispersity, molecular weight, radius of gyration, second virial coefficient, electrophoretic mobility, magnetophoretic mobility, zeta potential, and a particle shape.

15. A method of performing particle characterisation, comprising:

for each of at least three different wavelengths:

illuminating a sample with an illumination beam to produce scattered light from an interaction between the illumination beam and particles of the sample;
detecting the scattered light and recording scattering data corresponding with the scattered light;

using a processor to determine a particle characteristic from the combination of the scattering data for each wavelength.

Figure 1

Figure 2

Figure 3

Figure 4

Figure 5

Figure 6

Figure 7

Figure 8

106

104   103   101   111

102a

102b

109   105

102n

107   110

114

112

Figure 9

121

106   104

111   103

$\pi-\theta_3$     $\pi-\theta_3$

121     121

127     127

103   103   111

111

Figure 10

103c 103d

103a 103b

111b 111c 111d

111a

104

106

121a

121b 121c

121d

Figure 11

50

107 101 103 106

102a

105

102b 109

114 112

102n

110 111

Figure 12

Figure 13

Figure 14

104

$\theta_1$

125

126

129

104

127   103   111

106

Figure 15

106          104

$\pi - \theta_3$

127

103   111

Figure 16

140

102a 102b 102c

109

104

106

103

Figure 17

140

109

103

104

102a

102b 102c 102d

102e

Figure 18

Figure 19

Lens (Positive), $f$

$\omega_{2,\lambda b}$

$\omega_{2,\lambda a}$

$\omega_1, \lambda_a + \omega_1, \lambda_b$

$\omega_2 \propto f\lambda/\omega_1\pi n \Rightarrow \lambda_a > \lambda_b$

Lens (Positive) ), $f$

$\omega_1, \lambda b$

$\omega_1, \lambda a$

$\omega_{2,\lambda b} = \omega_{2,\lambda a}$

Figure 20

Europäisches
Patentamt

European
Patent Office

Office européen
des brevets

## EUROPEAN SEARCH REPORT

**Application Number**

EP 23 22 0856

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/375453 A1 (NAKAMURA SOHICHIRO [JP] ET AL) 23 November 2023 (2023-11-23) * paragraphs [0009], [0088], [0099], [0113], [0129], [0138] - paragraph [0139]; figure 1 * | 1-15 | INV. G01N15/0205 G01N21/51 G01N21/47 |
| | ----- | | |
| X | US 2021/270711 A1 (MARTINS JOSE VANDERLEI [US]) 2 September 2021 (2021-09-02) * paragraph [0009] - paragraphs [0010], [0054]; figure 1 * | 1,15 | |
| | ----- | | |

| TECHNICAL FIELDS SEARCHED (IPC) |
|---|
| G01N |

The present search report has been drawn up for all claims

| Place of search | Date of completion of the search | Examiner |
|---|---|---|
| The Hague | 13 June 2024 | Lokajova, Jana |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

............................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**                    EP 23 22 0856

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2024

| Patent document cited in search report | Publication date | Patent family member(s) | Publication date |
|---|---|---|---|
| US 2023375453 A1 | 23-11-2023 | CN 116868043 A | 10-10-2023 |
| | | EP 4290213 A1 | 13-12-2023 |
| | | JP WO2022168554 A1 | 11-08-2022 |
| | | KR 20230125051 A | 28-08-2023 |
| | | US 2023375453 A1 | 23-11-2023 |
| | | WO 2022168554 A1 | 11-08-2022 |
| US 2021270711 A1 | 02-09-2021 | NONE | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017051149 A

**Non-patent literature cited in the description**

- **SEGRE, P. N et al.** Two-colour dynamic light scattering. *Journal of Modern Optics*, 1995, vol. 42 (9), 1929-1952